# EUROPEAN PATENT APPLICATION

(11) **EP 2 757 245 A1**
(43) Date of publication of application: **23.07.2014**
(21) Application number: 12831682.5
(22) Date of filing: 13.09.2012
(51) Int. Cl.: F02M 25/07

(54) **EGR GAS COOLING SYSTEM**

(30) Priority: 16.09.2011 JP 2011202528; 16.09.2011 JP 2011202534
(71) Applicant: Calsonic Kansei Corporation, Saitama 331-8501 (JP); Tokyo Radiator Mfg. Co., Ltd., Fujisawa-shi, Kanagawa 252-0816 (JP)
(72) Inventor: SAKAGAWA Konomu, Kita-ku, Saitama-shi Saitama 331-8501 (JP); YOKOYAMA Hirokazu, Kanagawa 252-0816 (JP)
(74) Representative: Peguet, Wilfried
(86) International application number: PCT/JP2012/073524
(87) International publication number: WO 2013/039176

(57) **Abstract**

An object of the present invention is to provide an EGR gas cooling system which can rapidly raise the temperature of cooling water after an engine is stated.

The EGR gas cooling system of the present invention includes a main cooling water circuit (6)which circulates cooling water between an engine (3), a main radiator (7) that radiates heat of the cooling water of the engine (3) and a primary EGR cooler (1) that cools EGR gas by the cooling water and a low temperature cooling water circuit (9) which circulates the cooling water between the engine(3), a sub-radiator (10) provided integrally with or separately from the main radiator (7) to radiate heat in the cooling water and a secondary EGR cooler (2) that cools the EGR gas by the cooling water. A flow rate controller (12) which controls a flow rate of the cooling water is provided between the engine (3) and the sub-radiator (10) of the low temperature cooling water circuit (9).

## Description

### TECHNICAL FIELD

The present invention relates to a circulation system of cooling water which circulates in each heat exchanger to be mounted on a motor vehicle and a control for it.

### BACKGROUND ART

As a countermeasure for atmospheric air pollution by exhaust gas of a motor vehicle, the vehicle on which a diesel engine is mounted generally uses an EGR system which circulates the exhaust gas to the engine.

However, under a high load state of the engine, the temperature of the exhaust gas rises. Thus, when the exhaust gas is circulated to an air intake system of the engine as it is, combustion temperature rises so that, conversely, a concentration of nitrogen oxide in the exhaust gas is increased. Thus, a heat exchanger (an EGR cooler) is ordinarily provided to cool the exhaust gas by cooling water, and then, circulate the exhaust gas to the engine.

The cooling water of the EGR cooler is also used as cooling water of the engine at the same time.

A main cooling water circuit forms a passage in which the cooling water that radiates heat to running air by a radiator is returned to the engine, and a part of the cooling water is taken out and allowed to enter the EGR cooler so as to cool the EGR gas by the EGR cooler before the cooling water cools the engine, and then, joins to the cooling water flowing into the engine from the radiator, and a part of the cooling water is allowed again to flow to the EGR cooler and the rest thereof cools the engine and is circulated to the radiator.

When the engine is operated, the temperature of the cooling water the heat of which is radiated by the radiator ordinarily exceeds about 80 °C, which depends on operation conditions. Accordingly, the temperature of the exhaust gas cooled by the EGR cooler through the cooling water is not the temperature of the cooling water or lower.

In recent years, in order to strengthen a regulation to the exhaust gas, a heavy duty of the EGR cooler and a low combustion temperature of the engine are requested to be obtained.

To meet a request for the heavy duty of the EGR cooler, the size of the EGR cooler is enlarged or the number of the EGR coolers to be used is increased to a plurality of numbers of EGR coolers.

In order to lower the combustion temperature of the engine, the temperature of the exhaust gas (the EGR gas) which is circulated to the engine needs to be lowered.

In a conventional technique, there is a supercharged air cooling system in which a sub-radiator is newly installed that more cools cooling water supplied to an intercooler so as to lower a supercharged air temperature for the purpose of lowering a combustion temperature of an engine, and a low temperature cooling water circuit in which the cooling water circulates to the sub-radiator, the intercooler and the engine is provided separately from a main cooling water circuit (Patent Document 1).

### PRIOR ART DOCUMENT

### PATENT DOCUMENT

Patent Document 1: US-A-2008066697

### SUMMARY OF THE INVENTION

### PROBLEMS THAT THE INVENTION IS TO SOLVE

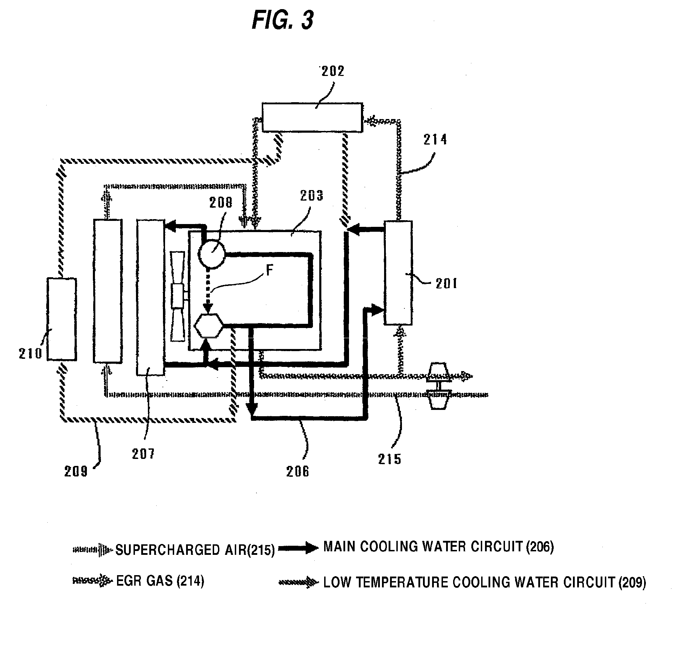

When the above-described supercharged air cooling system is applied to an EGR gas cooling system, for instance, as shown in Fig. 3, two EGR coolers 201 and 202 are installed and the second EGR cooler (a secondary EGR cooler 202) is arranged in the above-described low temperature cooling water circuit 209. Thus, in the secondary EGR cooler 202, EGR gas can be cooled by cooling water of lower temperature.

In this EGR gas cooling system, the cooling water the heat of which is radiated in a sub-radiator 210 and passes through the secondary EGR cooler 202 is joined to a main cooling water circuit 206 and returned to an engine 203.

In an operation of the engine 203, after the engine is started, a warming-up operation is carried out to rapidly raise the temperature of a device and the cooling water is also preferably raised to a proper temperature.

Accordingly, the main cooling water circuit 206 is closed by a thermostat 208 when a water temperature is low, so that the cooling water is not supplied to a main radiator 207.

However, the cooling water is always circulated to the low temperature cooling water circuit 209. Thus, even when the engine is desired to be warmed up, since the cooling water receives heat from the engine 203 and the sub-radiator 210 radiates the heat, the engine 203 is prevented from being warmed up.

Especially, under an operating condition that an air temperature is low and a load of the engine is also low, the rise of the temperature of the cooling water is delayed.

The present invention is devised by solving the above-described problems and it is an object of the present invention to provide an EGR gas cooling system in which a low temperature cooling water circuit is provided to lower the temperature of cooling water supplied to an EGR cooler and a way of flow of the cooling water in the low temperature cooling water circuit is controlled so that the temperature of the cooling water may be rapidly raised after an engine is started.

### MEANS FOR SOLVING THE PROBLEMS

According to a first aspect of the invention, there is provided an EGR gas cooling system including: a main cooling water circuit configured to circulate cooling water between an engine, a main radiator that is configured to radiate heat of the cooling water of the engine and a primary EGR cooler that is configured to cool EGR gas by the cooling water; and a low temperature cooling water circuit configured to circulate the cooling water between the engine, a sub-radiator provided integrally with or separately from the main radiator to radiate heat in the cooling water and a secondary EGR cooler that is configured to cool the EGR gas by the cooling water, wherein a flow rate controller, which is configured to control a flow rate of the cooling water, is provided between the engine and the sub-radiator of the low temperature cooling water circuit.

According to a second aspect of the invention, the flow rate controller opens the low temperature cooling water circuit when the temperature of the cooling water in the engine is a prescribed temperature or higher.

According to a third aspect of the invention, the flow rate controller opens the low temperature cooling water circuit when the temperature of the EGR gas is a prescribed temperature or higher.

According to a fourth aspect of the invention, the flow rate controller opens the low temperature cooling water circuit when the EGR gas is supplied to the secondary EGR cooler.

According to a fifth aspect of the invention, a bypass passage is provided in the low temperature cooling water circuit, the bypass passage branches from the low temperature cooling water circuit, bypasses the sub-radiator and joins to the low temperature cooling water circuit in an upstream side of the secondary EGR cooler, and the flow rate controller controls a flow of the cooling water of the sub-radiator side and the bypass passage of the low temperature cooling water circuit

According to a sixth aspect of the invention, the cooling water is supplied to the bypass passage when the temperature of the cooling water in the engine is lower than a prescribed temperature, and the cooling water is supplied to the sub-radiator when the temperature of the cooling water in the engine is the prescribed temperature or higher.

According to a seventh aspect of the invention, the flow rate controller supplies the cooling water to the bypass passage when the EGR gas is not supplied to the secondary EGR cooler, and the flow rate controller supplies the cooling water to the sub-radiator when the EGR gas is supplied to the secondary EGR cooler.

According to an eighth aspect of the invention, the flow rate controller is arranged in an upstream side of the sub-radiator.

According to a ninth aspect of the invention, the flow rate controller is a passage control valve which is configured to adjust a flow rate of the cooling water depending on an opening degree.

### ADVANTAGEOUS EFFECTS OF THE INVENTION

According to a first invention, since the flow rate controller which controls the flow rate of the cooling water is provided between the engine and the sub-radiator of the low temperature cooling water circuit, the low temperature cooling water circuit can be closed by the flow rate controller immediately after the engine is started to rapidly warm up the engine. Further, after a warming-up operation of the engine is finished or when the EGR gas needs to be cooled, the low temperature cooling water circuit can be opened to cool the EGR gas by the secondary EGR cooler. A decrease of temperature rise time of the engine and a cooling performance of the EGR gas may be allowed to be compatible with each other.

According to a second invention, since the flow rate controller opens the low temperature cooling water circuit when the temperature of the cooling water in the engine is a prescribed temperature or higher, the low temperature cooling water circuit can be closed by the flow rate controller immediately after the engine is started to rapidly warm up the engine. Further, after a warming-up operation of the engine is finished, the low temperature cooling water circuit can be opened to cool the EGR gas by the secondary EGR cooler. A decrease of temperature rise time of the engine and a cooling performance of the EGR gas may be allowed to be compatible with each other.

According to a third invention, since the flow rate controller opens the low temperature cooling water circuit when the temperature of the EGR gas is a prescribed temperature or higher, the low temperature cooling water circuit can be closed by the flow rate controller immediately after the engine is started to rapidly warm up the engine. Further, after a warming-up operation of the engine is finished, the low temperature cooling water circuit can be opened to cool the EGR gas by the secondary EGR cooler. A decrease of temperature rise time of the engine and a cooling performance of the EGR gas may be allowed to be compatible with each other.

According to a fourth invention, since the flow rate controller opens the low temperature cooling water circuit when the EGR gas is supplied to the secondary EGR cooler, the low temperature cooling water circuit can be closed by the flow rate controller immediately after the engine is started to rapidly warm up the engine. Further, when the EGR gas is supplied to the secondary cooler, the low temperature cooling water circuit can be opened to cool the EGR gas by the secondary EGR cooler and the secondary EGR cooler can be prevented from being broken due to boiling of the cooling water.

Accordingly, especially in a vehicle which begins to circulate the EGR gas even when the temperature of the cooling water is low, the EGR gas can be cooled and the secondary EGR cooler can be prevented from being broken.

According to a fifth invention, since in the low temperature cooling water circuit, a bypass passage is provided which branches from the low temperature cooling water circuit, bypasses the sub-radiator and joins to the low temperature cooling water circuit in an upstream side of the secondary EGR cooler and the flow rate controller is provided which controls a flow of the cooling water of the sub-radiator side and the bypass passage of the low temperature cooling water circuit, the cooling water can be supplied to the bypass passage by the flow rate controller immediately after the engine is started to rapidly warm up the engine. Further, after a warming-up operation of the engine is finished or when the EGR gas needs to be cooled, the cooling water can be supplied to the sub-radiator side by the flow rate controller to lower the temperature of the cooling water and cool the EGR gas by the secondary EGR cooler. Thus, a shortening of temperature rise time of the engine and a cooling performance of the EGR gas may be allowed to be compatible with each other.

According to a sixth invention, since the flow rate controller supplies the cooling water to the bypass passage when the temperature of the cooling water in the engine is lower than a prescribed temperature, and supplies the cooling water to the sub-radiator when temperature of the cooling water in the engine is the prescribed temperature or higher, the cooling water can be supplied to the bypass passage by the flow rate controller when the temperature of the cooling water is low to rapidly warm up the engine. Further, when the temperature of the cooling water is high, the cooling water can be supplied to the sub-radiator by the flow rate controller to lower the temperature of the cooling water and cool the EGR gas by the secondary EGR cooler. Thus, a shortening of temperature rise time of the engine and a cooling performance of the EGR gas may be allowed to be compatible with each other.

Further, since the cooling water is constantly supplied to the secondary EGR cooler and does not stagnate, a fear may be reduced that the cooling water in the secondary EGR cooler is locally boiled by the EGR gas to break the secondary EGR cooler.

According to a seventh invention, the flow rate controller supplies the cooling water to the bypass passage when the EGR gas is not supplied to the secondary EGR cooler, and the flow rate controller supplies the cooling water to the sub-radiator when the EGR gas is supplied to the secondary EGR cooler, the cooling water can be supplied to the bypass passage by the flow rate controller when the EGR gas does not need to be cooled to rapidly warm up the engine. When the EGR gas begins to be circulated to the secondary EGR cooler, the cooling water can be supplied to the sub-radiator by the flow rate controller to lower the temperature of the cooling water and cool the EGR gas by the secondary EGR cooler. Further, the secondary EGR cooler can be prevented from being broken due to a boiling of the cooling water.

Accordingly, especially in a vehicle which begins to circulate the EGR gas even when the temperature of the cooling water is low, the EGR gas can be cooled and the secondary EGR cooler can be prevented from being broken.

Further, according to the structures of an eighth invention or a ninth invention, the present invention may be realized by a simple structure.

### BRIEF DESCRIPTION OF THE DRAWINGS

Fig. 1 is an explanatory view showing an EGR gas cooling system according to a first embodiment and a second embodiment of the present invention.
Fig. 2 is an explanatory view showing an EGR gas cooling system according to a third embodiment of the present invention.
Fig. 3 is an explanatory view showing a usual EGR gas cooling system.

### MODES FOR CARRYING OUT THE INVENTION

### <First Embodiment>

Now, an EGR gas cooling system according to a first embodiment of the present invention will be described below.

The EGR gas cooling system is used for vehicles such as trucks or construction machines using diesel engines of middle or large classes which circulate a large quantity of exhaust gas (EGR) so as to be adapted to an emission regulation of exhaust gas.

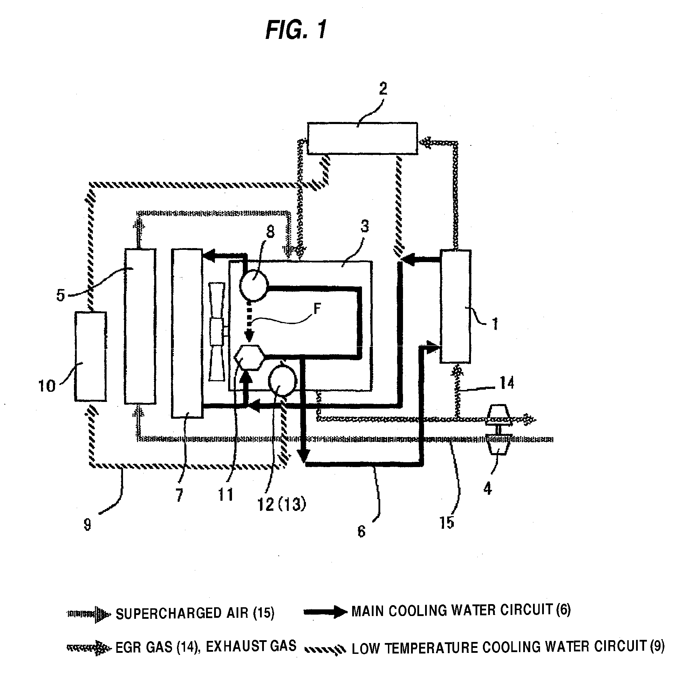

In order to cool a large quantity of EGR gas, a vehicle has two EGR coolers including a primary EGR cooler 1 and a secondary EGR cooler 2 as shown in Fig. 1. The EGR gas passes through a piping from an air exhaust system of an engine 3, is supplied to the primary EGR cooler 1 and the secondary EGR cooler 2 in order and cooled, and then, circulated to an air intake system of the engine 3 (a piping 14 of the EGR gas).

Further, in the vehicle, supercharged air obtained by compressing intake air by a turbo-charger 4 is cooled through running air by an intercooler 5 and supplied to the air intake system of the engine (a supercharged air path 15). A part of exhaust gas exhausted from the air exhaust system of the engine 3 is circulated to the engine as the EGR gas. However, the rest thereof is used as energy for compressing the intake air by the turbo-charger 4 and supplying the compressed intake air to the air intake system of the engine 3.

The primary EGR cooler 1 is arranged in a main cooing water circuit 6.

The main cooling water circuit 6 forms a passage in which cooling water that radiates heat to running air by a main radiator 7 is returned to the engine 3, and a part of the cooling water is taken out and allowed to enter the primary EGR cooler 1 so as to cool the EGR gas by the primary EGR cooler 1 before the cooling water cools the engine 3, and then, joins to the cooling water flowing into the engine 3 from the main radiator 7, and a part of the cooling water is allowed again to flow to the primary EGR cooler 1 and the rest thereof cools the engine 3 and is circulated to the main radiator 7.

In the vicinity of an outlet which leads the cooling water to the main radiator 7 from the engine 3, a main flow rate controller by a thermostat 8 is provided. The thermostat 8 closes a piping to the main radiator 7 when the temperature of the cooling water in the engine 3 is lower than a prescribed temperature, and opens the piping to the main radiator 7 when the temperature of the cooling water is the prescribed temperature or higher.

Thus, when the temperature of the engine 3 is low immediately after the engine is started, the thermostat 8 closes the piping to the main radiator 7 from the engine 3. Thus, the engine 3 is not prevented from being warmed up. At this time, the cooling water does not pass the main radiator 7, and is supplied as shown by a broken line arrow mark F in Fig. 1 and circulated in a passage between the engine 3 and the primary EGR cooler 1 to cool the EGR gas in the primary EGR cooler 1. Further, when the cooling water of the engine 3 is warmed to the prescribed temperature by a warming-up operation, the thermostat 8 is opened so that the cooling water is supplied to the main radiator 7 so as to radiate heat to the running air.

The secondary EGR cooler 2 is arranged in a low temperature cooling water circuit 9.

The low temperature cooling water circuit 9 forms a passage in which a part of the cooling water is taken out before the cooling water having the heat radiated to the running air by the main radiator 7 is returned to the engine 3 to cool the engine 3, heat is radiated to running air by a sub-radiator 10 to lower the temperature of the cooling water and cool the EGR gas in the secondary EGR cooler 2, and then, the cooling water joins to the main cooling water circuit 6 returned to the engine 3 from the primary EGR cooler 1 and circulated.

The cooling water is circulated in the main cooling water circuit 6 and the low temperature cooling water circuit 9 by a water pump 11.

In such a way, when the secondary EGR cooler 2 and the low temperature cooling water circuit 9 are provided, in the secondary EGR cooler 2, the EGR gas cooled in the primary EGR cooler 1 can be cooled by the cooling water which becomes lower in the sub-radiator 10, so that a cooling performance of the EGR gas cooling system can be improved.

The sub-radiator 10 may be provided separately from the main radiator 7 as shown in Fig. 1, or may be provided integrally with the main radiator 7, and then, internally divided.

In the EGR gas cooling system, also in the vicinity of an outlet which leads out the cooling water to the low temperature cooling water circuit 9 from the engine 3, a thermostat 12 (one example of a flow rate controller) is provided.

In the thermostat 12, wax which expands and contracts depending on a temperature is sealed. The wax reacts to the rise and fall of the temperature of the cooling water of the engine 3, so that the low temperature cooling water circuit 9 can be opened and closed.

Thus, when the temperature of the engine 3 is low immediately after the engine is started, the thermostat 12 closes a piping to the sub-radiator 10 from the engine 3 so that the cooling water is not supplied to the low temperature cooling water circuit 9, and the cooling water flows as shown by the broken line arrow mark in Fig. 1. Thus, the cooling water does not unnecessarily cool the engine 3 to prevent the engine from being warmed up until the engine 3 is warmed and the cooling water reaches the prescribed temperature, so that a temperature rise time can be shortened.

On the other hand, when the temperature of the cooling water of the engine 3 is the prescribed temperature or higher, the low temperature cooling water circuit 9 is opened to lower the temperature of the cooling water by the sub-radiator 10 and the EGR gas can be more cooled by the secondary EGR cooler 2.

In such a way, by a relatively inexpensive thermostat 12, a shortening of the temperature rise time of the engine 3 and a cooling performance of the EGR gas cooling system can be easily allowed to be compatible with each other.

Since the thermostat 12 is a mechanism using a thermal expansion of a material, a completely closed state is not instantaneously changed to a completely opened state. Thus, the temperature of the cooling water has a width or range until the low temperature cooling water circuit 9 shifts from the completely closed state to the completely opened state. Accordingly, the temperature of the cooling water at which the thermostat 12 begins to open needs to be set to a temperature several degrees lower than a temperature at which the EGR gas begins to be supplied to the secondary EGR cooler 2 by considering an unevenness of a product accuracy.

### <Second Embodiment>

Now, an EGR gas cooling system according to a second embodiment of the present invention will be described below.

The EGR gas cooling system according to the second embodiment is the same as the first embodiment in view of a point that a main cooling water circuit 6 is provided in which cooling water is circulated between an engine 3, a main radiator 7 and a primary EGR cooler 1, and a point that a sub-radiator 10 and a secondary EGR cooler 2 are provided and a low temperature cooling water circuit 9 is provided in which cooling water is circulated thereto.

The second embodiment is different from the first embodiment in view of a point that a solenoid valve 13 (one example of a flow rate controller)is provided in the vicinity of an outlet which leads out the cooling water to the low temperature cooling water circuit 9 from the engine 3.

The solenoid valve 13 is controlled by a signal from a controlling computer (not shown in the drawing) to be mounted on a vehicle.

In the second embodiment, as an example of a control method of the solenoid valve 13, the solenoid valve 13 is set to be held in a completely closed state during a warming-up operation after the engine 3 is started. The solenoid valve 13 is set to be completely opened when a circulation of EGR gas to the secondary EGR cooler 2 is started.

Since the opening and closing of the solenoid valve 13 are set in such a way as described above, the low temperature cooling water circuit 9 is closed until the EGR gas is supplied. Thus, the engine 3 is prevented from being unnecessarily cooled by the cooling water, so that the engine 3 can be rapidly warmed up.

On the other hand, when the EGR gas is supplied to the secondary EGR cooler 2, the solenoid valve 13 is opened, so that the cooing water is circulated to cool the EGR gas in the secondary EGR cooler 2. Accordingly, when the EGR gas is supplied to the secondary EGR cooler 2, a circulation of the cooling water does not stagnate. Further, there is no fear that the cooling water in the secondary EGR cooler 2 is heated and boiled by the EGR gas to break the secondary EGR cooler 2.

When a load of the engine or the temperature of the cooling water corresponds to prescribed conditions, a flow rate control valve (not shown in the drawing) such as an EGR valve provided in a piping 14 of the EGR gas is opened by the controlling computer so that the EGR gas begins to be circulated to the primary EGR cooler 1 and the secondary EGR cooler 2 arranged in series.

As another example of the control method of the solenoid valve 13, the solenoid valve 13 may be set to be held in a completely closed state during a warming-up operation after the engine 3 is started, and the solenoid valve 13 may be set to be opened by a prescribed rate (for instance, about half opened) so as to begin to supply the cooling water to the secondary EGR cooler 2 in accordance with a start of a circulation of the ERG gas. After that, a thermostat 8 of the main cooling water circuit 6 is opened so that a flow of the cooling water to the main radiator 7 is detected by a flow rate sensor or a temperature sensor, and the solenoid valve 13 is set to be completely opened at the same time. A condition under which the solenoid valve 13 is completely opened may be set to other standard or timing which can maximize a cooling performance of the secondary EGR cooler.

Further, a flow rate of the EGR gas may be detected by the flow rate sensor and an opening degree of the solenoid valve 13 may be set to be suitably adjusted so that a suitable flow rate of the cooling water may be obtained correspondingly thereto.

Further, the temperatures of the cooling water respectively in the engine 3, the main radiator 7 and the sub-radiator 10 are detected by the temperature sensor and the opening degree of the solenoid valve 13 may be set to be suitably adjusted in accordance with the relation of them.

Further, the temperature of the EGR gas of the engine or the secondary EGR cooler is detected. Then, the solenoid valve 13 may be set to be opened when the temperature of the EGR gas is a prescribed temperature or higher.

As described above, when the opening degree of the solenoid valve 13 is adjusted in multiple stages, the temperature of the engine 3 can be more efficiently raised and a cooling efficiency of the EGR gas can be improved by the secondary EGR cooler 2.

Further, in the vicinity of the outlet which leads out the cooling water to the low temperature cooling water circuit 9 from the engine 3, a flow rate controller formed with an actuator type valve may be provided in place of the solenoid valve.

A control method of the actuator type valve is the same as the control method of the solenoid valve 13.

As other flow rate controller, an electronic control valve which can adjust an opening degree by an electronically controlled motor may be provided. A control method of the electronic control valve is the same as the control method of the solenoid valve 13

### <Third Embodiment>

Now, an EGR gas cooling system according to a third embodiment of the present invention will be described below.

The EGR gas cooling system is used for vehicles such as trucks or construction machines using diesel engines of middle or large classes which circulate a large quantity of exhaust gas (EGR) so as to be adapted to an emission regulation of exhaust gas.

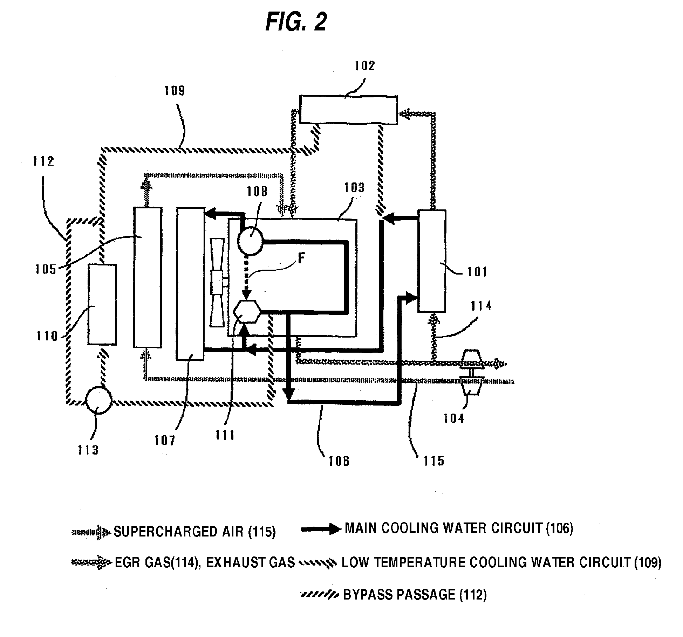

In order to cool a large quantity of EGR gas, a vehicle has two EGR coolers including a primary EGR cooler 101 and a secondary EGR cooler 102 as shown in Fig. 2. The EGR gas passes through a piping from an air exhaust system of an engine 103, is supplied to the primary EGR cooler 101 and the secondary EGR cooler 102 in order and cooled, and then, circulated to an air intake system of the engine 103 (a piping 114 of the EGR gas).

In the piping 114 of the EGR gas, a flow rate control valve (not shown in the drawing) such as an EGR valve is provided. When a load of the engine or a temperature of cooling water corresponds to prescribed conditions, the flow rate control valve is opened by a controlling computer (not shown in the drawing) so that the EGR gas begins to be circulated to the primary EGR cooler 101 and the secondary EGR cooler 102 arranged in series.

Further, in the vehicle, supercharged air obtained by compressing intake air by a turbo-charger 104 is cooled through running air by an intercooler 105 and supplied to the air intake system of the engine (a supercharged air path 115). A part of the exhaust gas exhausted from the air exhaust system of the engine 103 is circulated to the engine as the EGR gas. However, the rest thereof is used as energy for compressing the intake air by the turbo-charger 104 and supplying the supercharged air to the air intake system of the engine 103.

The primary EGR cooler 101 is arranged in a main cooing water circuit 106.

The main cooling water circuit 106 forms a passage in which the cooling water that radiates heat to running air by a main radiator 107 is returned to the engine 103, and a part of the cooling water is taken out and allowed to enter the primary EGR cooler 101 so as to cool the EGR gas by the primary EGR cooler 101 before the cooling water cools the engine 103, and then, joins to the cooling water flowing into the engine 103 from the main radiator 107, and a part of the cooling water is allowed again to flow to the primary EGR cooler 101 and the rest of the cooling water cools the engine 103 and is circulated to the main radiator 107.

In the vicinity of an outlet which leads the cooling water to the main radiator 107 from the engine 103, a main flow rate controller by a thermostat 108 is provided. The thermostat 108 closes a piping to the main radiator 107 when the temperature of the cooling water in the engine 103 is lower than a prescribed temperature, and opens the piping to the main radiator 107 when the temperature of the cooling water is the prescribed temperature or higher.

In the thermostat 108, wax which expands and contracts depending on a temperature is sealed. The wax reacts to the rise and fall of the temperature of the cooling water of the engine 103, so that the piping to the main radiator 107 can be opened and closed.

Thus, when the temperature of the engine 103 is low immediately after the engine is started, the thermostat 108 closes the piping to the main radiator 107 from the engine 103. Thus, the engine 103 is not prevented from being warmed up. At this time, the cooling water does not pass the main radiator 107, and is supplied as shown by a broken line arrow mark F in Fig. 2 and circulated in a passage between the engine 103 and the primary EGR cooler 101 to cool the EGR gas in the primary EGR cooler 101. Further, when the cooling water of the engine 103 is warmed to the prescribed temperature by a warming-up operation, the thermostat 108 is opened so that the cooling water is supplied to the main radiator 107 so as to radiate heat to the running air.

The secondary EGR cooler 102 is arranged in a low temperature cooling water circuit 109.

The low temperature cooling water circuit 109 forms a passage in which a part of the cooling water is taken out before the cooling water having the heat radiated to the running air by the main radiator 107 is returned to the engine 103 to cool the engine 103, heat is radiated to running air by a sub-radiator 110 to lower the temperature of the cooling water and cool the EGR gas in the secondary EGR cooler 102, and then, the cooling water is joined to the main cooling water circuit 106 returned to the engine 103 from the primary EGR cooler 101 and circulated.

The cooling water is circulated in the main cooling water circuit 106 and the low temperature cooling water circuit 109 by a water pump 111.

In such a way, since the secondary EGR cooler 102 and the low temperature cooling water circuit 109 are provided, in the secondary EGR cooler 102, the EGR gas cooled in the primary EGR cooler 101 can be cooled by the cooling water which becomes lower in the sub-radiator 110, so that a cooling performance of the EGR gas cooling system can be improved.

The sub-radiator 110 may be provided separately from the main radiator 107 as shown in Fig. 2, or may be provided integrally with the main radiator 107, and then, internally divided.

In the EGR gas cooling system, a bypass passage 112 is provided which branches from the low temperature cooling water circuit 109 in an upstream side of the sub-radiator 110, bypasses the sub-radiator 110 and joins to the low temperature cooling water circuit 109 in an upstream side of the secondary EGR cooler 102.

Further, in the vicinity of a branching part or a joining part of the low temperature cooling water circuit 109 and the bypass passage 112, a passage control valve by a solenoid valve 113 is provided so that the cooling water may be supplied from one of the sub-radiator 110 side or the bypass passage 112 which is selected. Further, as another example, the solenoid valve 113 (one example of a flow rate controller, one example of a passage control valve) may be provided in an intermediate part of the bypass passage 112 so as to distribute and supply a large quantity of flow rate of cooling water to one of the sub-radiator 110 side and the bypass passage 112.

The solenoid valve 113 switches a flow of the cooling water by a signal from a controlling computer (not shown in the drawing) to be mounted on the vehicle.

As an example of a control method of the solenoid valve 113, in the present embodiment, the temperature of the cooling water in the engine 103 is detected by a temperature sensor (not shown in the drawing). When the temperature of the cooling water is lower than the prescribed temperature, the cooling water is supplied to the bypass passage 112. When the temperature of the cooling water is the prescribed temperature or higher, the cooling water is supplied to the sub-radiator 110.

Thus, when the temperature of the engine 103 is low immediately after the engine is started, the solenoid valve 113 closes a piping to the sub-radiator 110 so that the cooling water is supplied to the bypass passage 112. Thus, the cooling water does not radiate heat in the sub-radiator 110 to prevent the engine from being warmed up until the engine 103 is warmed and the cooling water reaches the prescribed temperature, so that a temperature rise time can be shortened.

Further, at this time, the cooing water is continuously circulated to the secondary EGR cooler 102. Under a state that the EGR gas is supplied to the secondary EGR cooler 102, when the cooing water of the secondary EGR cooler 102 stagnates, there is a fear that the cooling water may be heated and boiled to break the secondary EGR cooler 102. However, in the present embodiment, since the cooling water is constantly supplied to the secondary EGR cooler 102, the cooing water is not boiled until the cooling water of an entire part of the EGR gas cooling system reaches a boiling point.

On the other hand, when the temperature of the cooling water of the engine 103 is the prescribed temperature or higher, the solenoid valve 113 closes the bypass passage 112 so that the cooling water may be supplied to the sub-radiator 110 to radiate heat and the EGR gas may be more cooled by the secondary EGR cooler 102.

After a high load is applied to the engine 103 by climbing a slope or the like, when the load is abruptly lowered and the running air to the main radiator 107 is reduced, the temperature of the cooling water suddenly rises. However, in the present embodiment, even in such a case, the cooling water can be supplied to the sub-radiator 110 by the solenoid valve 113, so that the temperature of the cooling water can be lowered by heat radiation.

As another example of a control method of the solenoid valve 113, a flow rate of the EGR gas in the piping 114 of the EGR gas is detected by a flow rate sensor (not shown in the drawing). Then, the cooling water may be set to be supplied to the bypass passage 112 when a circulation of the EGR gas is stopped. The cooling water may be set to be supplied to the sub-radiator 110 when the EGR gas is supplied to the piping 114.

Further, the cooling water may be set to be supplied to the bypass passage 112 when the flow rate of the EGR gas is lower than a prescribed value. The cooling water may be set to be supplied to the sub-radiator 110 when the flow rate of the EGR gas is the prescribed value or larger.

Thus, the cooling water is supplied to the bypass passage 112 until the EGR gas is circulated. Thus, the cooling water is prevented from radiating heat in the sub-radiator 110, so that the engine 103 can be prevented from being unnecessarily cooled and the engine 103 can be rapidly warmed up.

On the other hand, when the EGR gas is supplied to the secondary EGR cooler 102, the cooing water is supplied to the sub-radiator 110 by the solenoid valve 113 to cool the EGR gas in the secondary EGR cooler 102. Accordingly, when the EGR gas is supplied to the secondary EGR cooler 102, the cooling water does not stagnate in the secondary EGR cooler 102. There is no fear that the cooling water in the secondary EGR cooler 102 is heated and boiled by the EGR gas to break the secondary EGR cooler 102.

Further, as other example of a control method of the solenoid valve 113, the passage may be switched on the basis of both the temperature of the cooling water and the flow of the EGR gas.

Namely, when the temperature of the cooling water in the engine 103 is lower than the prescribed temperature (T1), the cooling water is supplied to the bypass passage 112 by the solenoid valve 113.

Then, when the cooling water is heated to reach T1, and when the EGR gas is supplied to the secondary EGR cooler 102, the cooling water is supplied to the sub-radiator 110 side by the solenoid valve 113. When the cooling water is T1 or higher, however, the EGR gas is not supplied to the secondary EGR cooler 102, the cooling water is supplied to the bypass passage 112.

Further, when the cooling water reaches a prescribed temperature (T2) higher than T1, even if the EGR gas is not supplied to the secondary EGR cooler 102, the cooling water is supplied to the sub-radiator 110 side by the solenoid valve.

Thus, especially when the engine needs to be warmed up, the cooling water is supplied to the bypass passage 112. Thus, the engine 103 can be rapidly warmed up. On the other hand, when it is highly necessary to radiate heat by the cooling water so as to realize a low temperature, for instance, when the temperature of the cooling water is T1 or higher and the EGR gas is supplied to the secondary EGR cooler 102, or when the temperature of the cooling water is T2 or higher and sufficiently high, the cooling water can be supplied to the sub-radiator 110 to radiate the heat.

Further, as other example of a control method of the solenoid valve 113, the temperature of the EGR gas exhausted from the engine 103 is detected by a temperature sensor (not shown in the drawing). Thus, the cooling water may be set to be supplied to the bypass passage 112 when the temperature of the EGR gas is lower than a prescribed temperature. The cooling water may be set to be supplied to the sub-radiator 110 when the temperature of the EGR gas is the prescribed temperature or higher. At this time, the temperature of the cooling water may be adjusted by a distribution of a flow rate in such a way that a part of the cooling water is supplied to the bypass passage and the rest thereof is supplied to the sub-radiator.

Thus, when the temperature of the EGR gas is low so that the EGR gas does not need to be cooled in the secondary EGR cooler 102, the cooling water can be supplied to the bypass passage 112. Thus, the EGR gas can be prevented from being excessively cooled to generate condensate of the exhaust gas in the secondary EGR cooler 102.

Further, as the passage control valve of the cooling water, an actuator type valve may be used in place of the solenoid valve 113.

A control method of the actuator type valve is the same as the control method of the solenoid valve 113.

As other passage control valve, an electronic control valve which can adjust an opening degree by an electronically controlled motor may be provided.

A control method of the electronic control valve is the same as the control method of the solenoid valve 113

Further, as the passage control valve of the cooling water, a thermostat may be used.

The thermostat supplies the cooling water to the bypass passage 112 when the temperature of the cooling water in the branching part is lower than the prescribed temperature. When the temperature of the cooling water is the prescribed temperature or higher, the wax of the thermostat reacts thereto so that the thermostat supplies the cooling water to the sub-radiator 110.

In such a way, by a relatively inexpensive thermostat, a shortening of the temperature rise time of the engine 103 and a cooling performance of the EGR gas cooling system can be easily allowed to be compatible with each other.

Further, the bypass passage 112 may be joined to a piping of the low temperature cooling water circuit 109 in the upstream side of the secondary EGR cooler 102 as shown in Fig. 2. However, the bypass passage 112 may be directly connected to the secondary EGR cooler 102 so as to be joined to the low temperature cooing water circuit 109.

The present invention is described above in detail by referring to the specific embodiments. However, it is to be understood to a person with ordinary skill in the art that various changes or modifications may be made without departing from the spirit and scope of the present invention. For instance, the structures of the first to the third embodiments may be suitably combined together to rapidly raise the temperature of the cooling water after the engine is started.

This application is based on Japanese Patent Application No. 2011-202528 filed on September 16, 2011 and Japanese Patent Application No. 2011-202534 filed on September 16, 2011 and contents thereof are incorporated herein as references.

### DESCRIPTION OF REFERENCE NUMERALS

1,101: primary EGR cooler
2, 102: secondary EGR cooler
3, 103: engine
4, 104: turbo-charger
5, 105: intercooler
6, 106: main cooling water circuit
7, 107: main radiator
8, 108: thermostat (main cooling water circuit)
9, 109: low temperature cooling water circuit
10, 110: sub-radiator
11, 111: water pump
12: thermostat (low temperature cooing water circuit)
112: bypass passage
13, 113: solenoid valve
14, 114: piping of EGR gas
15, 115: supercharged air path

## Claims

1. An EGR gas cooling system comprising:
a main cooling water circuit configured to circulate cooling water between an engine, a main radiator that is configured to radiate heat of the cooling water of the engine and a primary EGR cooler that is configured to cool EGR gas by the cooling water; and
a low temperature cooling water circuit configured to circulate the cooling water between the engine, a sub-radiator provided integrally with or separately from the main radiator to radiate heat in the cooling water and a secondary EGR cooler that is configured to cool the EGR gas by the cooling water, wherein
a flow rate controller, which is configured to control a flow rate of the cooling water, is provided between the engine and the sub-radiator of the low temperature cooling water circuit.

2. The EGR gas cooling system according to claim 1, wherein
the flow rate controller opens the low temperature cooling water circuit when the temperature of the cooling water in the engine is a prescribed temperature or higher.

3. The EGR gas cooling system according to claim 1, wherein
the flow rate controller opens the low temperature cooling water circuit when the temperature of the EGR gas is a prescribed temperature or higher.

4. The EGR gas cooling system according to claim 1, wherein
the flow rate controller opens the low temperature cooling water circuit when the EGR gas is supplied to the secondary EGR cooler.

5. The EGR gas cooling system according to claim 1 or 4, further comprising:
a bypass passage provided in the low temperature cooling water circuit, the bypass passage branching from the low temperature cooling water circuit, bypassing the sub-radiator and joining to the low temperature cooling water circuit in an upstream side of the secondary EGR cooler, wherein
the flow rate controller controls a flow of the cooling water of the sub-radiator side and the bypass passage of the low temperature cooling water circuit.

6. The EGR gas cooling system according to claim 5, wherein
the cooling water is supplied to the bypass passage when the temperature of the cooling water in the engine is lower than a prescribed temperature; and
the cooling water is supplied to the sub-radiator when the temperature of the cooling water in the engine is the prescribed temperature or higher.

7. The EGR gas cooling system according to claim 6, wherein
the flow rate controller supplies the cooling water to the bypass passage when the EGR gas is not supplied to the secondary EGR cooler; and
the flow rate controller supplies the cooling water to the sub-radiator when the EGR gas is supplied to the secondary EGR cooler.

8. The EGR gas cooling system according to any one of claims 1 to 7, wherein
the flow rate controller is arranged in an upstream side of the sub-radiator.

9. The EGR gas cooling system according to any one of claims 5 to 7, wherein
the flow rate controller is a passage control valve which is configured to adjust a flow rate of the cooling water depending on an opening degree.
